# EUROPEAN PATENT APPLICATION

(11) **EP 4 721 949 A1**
(43) Date of publication of application: **08.04.2026**
(21) Application number: 25204317.9
(22) Date of filing: 24.09.2025
(51) Int. Cl.: B29C 45/74, B29C 45/78

(54) **INJECTION MOLDING MACHINE, INJECTION DEVICE, AND METHOD OF CONTROLLING INJECTION MOLDING MACHINE**

(30) Priority: 27.09.2024 JP 2024168098
(71) Applicant: The Japan Steel Works, Ltd., Tokyo 141-0032 (JP)
(72) Inventor: OTANI, Megumi, Shinagawa-ku, Tokyo 141-0032 (JP); SEISHIN, Naoyuki, Shinagawa-ku, Tokyo 141-0032 (JP); MASUDA, Tomoki, Shinagawa-ku, Tokyo 141-0032 (JP)
(74) Representative: Simmons & Simmons LLP (Munich)

(57) **Abstract**

An injection molding machine heats an injection nozzle using, as a target temperature, a detected temperature of a synchronization zone (step S6), when a detected temperature of the injection nozzle is lower than a nozzle reference temperature (YES in step S2). The injection molding machine heats the injection nozzle using a nozzle set temperature as a target temperature, when a detected temperature of the injection nozzle is higher than the nozzle reference temperature (NO in step S2).

## Description

### CROSS REFERENCE TO RELATED APPLICATIONS

This nonprovisional application is based on Japanese Patent Application No. 2024-168098 filed on September 27, 2024 with the Japan Patent Office, the entire contents of which are hereby incorporated by reference.

### BACKGROUND OF THE INVENTION

### Field of the Invention

The present disclosure relates to an injection molding machine, an injection device, and a method of controlling the injection molding machine.

### Description of the Background Art

Japanese Patent Laying-Open No. 2006-240203 discloses an injection molding machine. This injection molding machine controls the temperature of the nozzle and the temperature of the cylinder by feedback control.

### SUMMARY OF THE INVENTION

In the above-described injection molding machine, generally the volume of the nozzle is smaller than the volume of the cylinder, and furthermore, since a material to be injected is stored in the cylinder, the heat capacity of the cylinder is larger than the heat capacity of the nozzle. Therefore, when the same amount of heat is applied to the nozzle and the cylinder, the temperature increase rate of the nozzle is faster than the temperature increase rate of the cylinder.

As such, when the temperature of the nozzle and the cylinder is raised in the injection molding machine, the timing at which the temperature of the nozzle reaches a set temperature is earlier than the timing at which the temperature of the cylinder reaches a set temperature. In this case, after the temperature of the nozzle reaches the set temperature, it is necessary to continue heating the nozzle in order to keep the temperature of the nozzle until the temperature of the cylinder reaches the set temperature. Accordingly, there may arise a problem that wasteful electric power is consumed in order to keep the temperature of the nozzle.

The present invention has been made to solve such a problem, and an object of the present invention is to reduce electric power consumed when the temperature of the nozzle is raised.

In the injection molding machine according to the present disclosure, the temperature of the nozzle is controlled, based on the temperature of the cylinder, so as not to exceed the temperature of the cylinder.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram for illustrating a configuration of an injection molding machine according to the present embodiment.
Fig. 2 is a diagram for illustrating a heating cylinder and an injection nozzle.
Fig. 3 is a functional block diagram of a controller.
Fig. 4 is a flowchart for illustrating a main process performed by the controller.
Fig. 5 is a diagram showing simulation results according to the present embodiment.

### DESCRIPTION OF THE PREFERRED EMBODIMENTS

Embodiments of the present disclosure are hereinafter described in detail with reference to the drawings. In the drawings, the same or corresponding parts are denoted by the same reference characters, and a description thereof is not herein repeated.

### [Configuration of Injection Molding Machine]

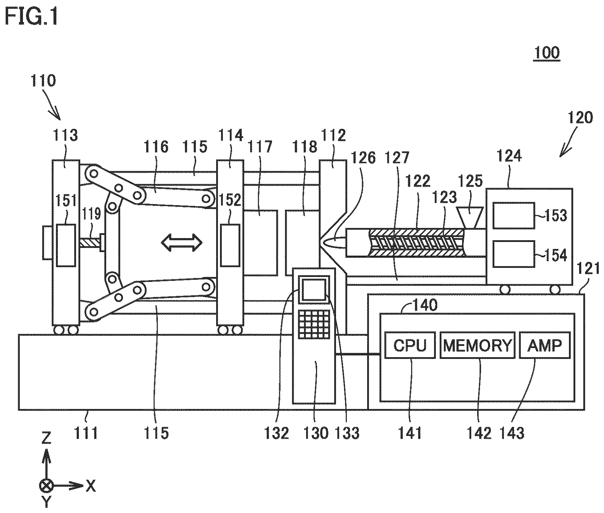

Fig. 1 is a diagram for illustrating a configuration of an injection molding machine 100 according to the present embodiment. For convenience of description, a floor surface on which injection molding machine 100 is placed is defined as XY plane, and the direction perpendicular to the floor surface is defined as Z-axis direction. The positive direction of the Z axis may be referred to as upper surface side or upper side, and the negative direction thereof may be referred to as lower surface side or lower side. Although injection molding machine 100 is shown as a horizontal injection molding machine, injection molding machine 100 is not limited to the horizontal injection molding machine but may be a vertical injection molding machine.

Injection molding machine 100 includes a mold clamping device 110 for clamping a mold, an injection device 120 for melting and injecting an injection material, an operation panel 130, and a controller 140. In Fig. 1, mold clamping device 110 is located on the negative direction side of the X axis with respect to injection device 120.

Mold clamping device 110 includes a bed 111, a stationary platen 112, a mold clamping housing 113, a movable platen 114, a tie bar 115, a mold clamping mechanism 116, molds 117 and 118, and a ball screw 119. Bed 111 is disposed on the floor surface, and devices such as stationary platen 112, mold clamping housing 113, and movable platen 114 are mounted on the upper surface of the bed.

On bed 111, stationary platen 112 is fixed to the end relatively closer to injection device 120 (that is, the end on the positive direction side of the X axis). On bed 111, mold clamping housing 113 is disposed at the end on the negative direction side of the X axis. Stationary platen 112 and mold clamping housing 113 are connected to each other by tie bars 115 including a plurality of bars. Mold clamping housing 113 is movable on bed 111 in the X-axis direction.

On bed 111, movable platen 114 is disposed between stationary platen 112 and mold clamping housing 113. Movable platen 114 is configured to be movable in the X-axis direction. Mold clamping housing 113 and movable platen 114 are connected to each other by mold clamping mechanism 116. Mold clamping mechanism 116 has a toggle mechanism. A ball screw 119 is connected to the toggle mechanism, and movable platen 114 can be caused to make relative movement in the X-axis direction with respect to mold clamping housing 113, by driving a servo motor 151 disposed at mold clamping housing 113 to rotate ball screw 119. A hydraulically-driven linear cylinder may be used as mold clamping mechanism 116.

Molds 117 and 118 are mounted on movable platen 114 and stationary platen 112, respectively. Mold 117 and mold 118 are arranged to face each other between movable platen 114 and stationary platen 112. Mold 117 and mold 118 can be brought into close contact with each other or mold 117 can be separated from mold 118 by moving mold 117 in the X-axis direction by means of mold clamping mechanism 116. In the following description, the step of causing mold 117 and mold 118 to make a transition from the separated state to the close contact state is referred to as "mold clamping." Moreover, the step of causing mold 117 and mold 118 to make a transition from the close contact state to the separated state is referred to as "mold opening."

In the state where mold 117 and mold 118 are brought into close contact with each other by the mold clamping step, a molten material (resin) is introduced into the molds, and cooled to be solidified, and accordingly a product can be molded in a desired shape (molded product). After molding the product, mold 117 is separated from mold 118 by the mold opening step and, in this state, the molded product can be removed out of mold 117 by operating an ejection mechanism (not shown) disposed at movable platen 114. The ejection mechanism is driven by a servo motor 152 disposed at movable platen 114. The step of removing the product by means of the ejection mechanism is referred to as "ejection" step.

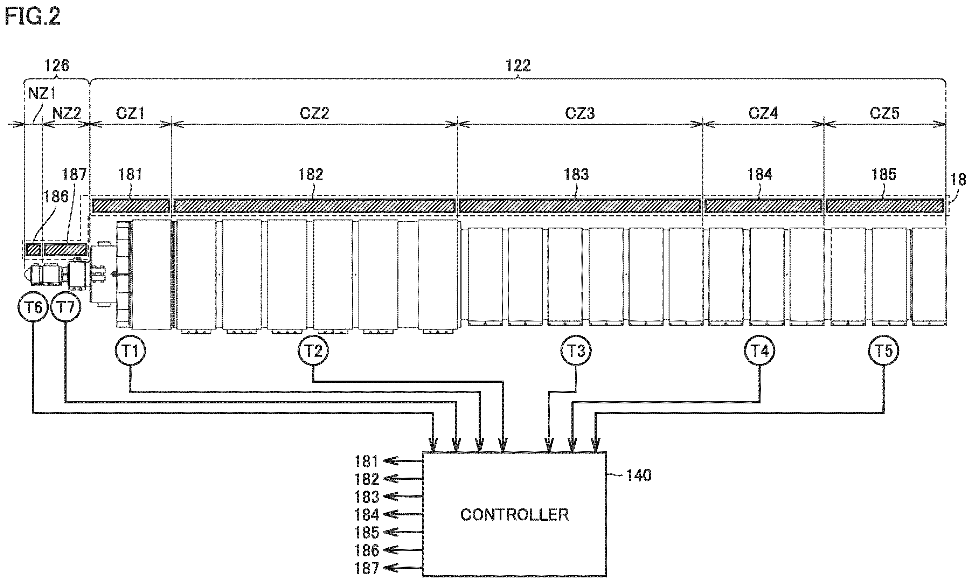

Injection device 120 includes a base 121, a heating cylinder 122, an actuation device 124, a hopper 125, an injection nozzle 126, a nozzle touch device 127, and temperature sensors. Heating cylinder 122 and injection nozzle 126 correspond respectively to "cylinder" and "nozzle" of the present disclosure. The temperature sensors are temperature sensors T1 to T7 in Fig. 2 described later herein.

Base 121 is disposed on a floor surface of bed 111 that is located on the positive direction side of the X axis, and actuation device 124 is mounted on the upper surface of the base. Servo motors 153 and 154 are disposed in actuation device 124.

Heating cylinder 122 extending in the X-axis direction is disposed at actuation device 124. Heating cylinder 122 includes a heating device (a heating device 18 in Fig. 2 described later herein) for heating the inside, and a screw 123. Screw 123 is driven by servo motor 153 in actuation device 124 and is configured to be rotatable about the X-axis direction as a rotation axis. Screw 123 is also driven by servo motor 154 and is configured to be movable in the X-axis direction.

Injection nozzle 126 is disposed at the distal end of heating cylinder 122 on mold clamping device 110 side (that is, the end located on the negative direction side of the X axis). Heating cylinder 122 generates a molten material by heating to melt a bead-shaped resin material introduced from hopper 125 and kneading the resin material with screw 123. Thus, the step of melting the resin material is referred to as "plasticizing" step. The plasticizing step also includes a process of weighing the molten material used for one shot.

Nozzle touch device 127 is formed of, for example, a mechanism using a hydraulic cylinder or a mechanism using a ball screw, and connects actuation device 124 and stationary platen 112 of mold clamping device 110 to each other. In the case where nozzle touch device 127 is formed of the mechanism using a ball screw, nozzle touch device 127 is driven by actuation device 124 to move actuation device 124 and heating cylinder 122 in the X-axis direction. Nozzle touch device 127 brings injection nozzle 126 into contact with a sprue bush of mold 118 in mold clamping device 110, to cause the molten material to be injected from injection nozzle 126, to thereby introduce the molten material into molds 117 and 118. Thus, the cavity in molds 117 and 118 is filled with the molten material. Servo motor 154 applies pressure to the molten material by moving screw 123 in heating cylinder 122 in the negative direction of the X axis, to thereby cause the molten material to be injected into molds 117 and 118, and keeps constant the pressure of the molten material after being injected.

The configuration of the nozzle touch mechanism is not limited to the configuration as described above in which the entire injection device is moved by the ball screw disposed between stationary platen 112 and actuation device 124, but may be another configuration. For example, a device frame and a stationary member of the rear portion of the heating cylinder may be coupled to each other with a ball screw, and the heating cylinder itself may be moved toward the mold. Alternatively, a slide base on which the injection device is mounted may be connected to the device frame with a ball screw, and the injection device may be moved together with the slide base to bring the injection nozzle into contact with the mold.

The step of injecting the molten material into molds 117 and 118 is referred to as "injection" step. After the injection step, the step of keeping the molten material filling the inside of molds 117 and 118 at a constant pressure and cooling the molten material is referred to as "pressure keeping" step.

After the pressure keeping step is completed, the mold opening step and the ejection step are performed to remove the molded product.

Injection molding machine 100 can successively form products by cyclically repeating the mold clamping step, the injection step, the pressure keeping step, the plasticizing step, the mold opening step, and the ejection step.

Controller 140 is stored inside base 121. Controller 140 includes a CPU 141, a memory 142, and a servo amplifier 143 for driving servo motors 151 to 154. Controller 140 acquires values detected by various sensors disposed in injection molding machine 100, and performs centralized control of injection molding machine 100.

Operation panel 130 is a device for a user to operate injection molding machine 100, and includes a display 132 having a display region for displaying various images, and an input device such as keyboard. Operation panel 130 is connected to controller 140, and can acquire and display the state of injection molding machine 100, and can output a user operation signal from the input device to controller 140.

Display 132 of the present embodiment is a touch panel, and can display an image and receive an input (instruction) from a user. Controller 140 acquires the input (instruction) from the user. Operation panel 130 may be attached to bed 111 or base 121 of injection molding machine 100, or may be placed at a position independent of injection molding machine 100.

### [Heating Cylinder and Injection Nozzle]

Fig. 2 is a diagram for illustrating heating cylinder 122 and injection nozzle 126. Heating cylinder 122 is divided into a plurality of zones in the extending direction in which the cylinder extends (X axis in Fig. 1). In the example of Fig. 2, heating cylinder 122 is divided into five zones: a zone CZ1, a zone CZ2, a zone CZ3, a zone CZ4, and a zone CZ5. Injection nozzle 126 is also divided into a plurality of zones in the extending direction. In the example of Fig. 2, injection nozzle 126 is divided into two zones: a zone NZ1 and a zone NZ2.

Zone CZ1 is a zone to which injection nozzle 126 is connected, and corresponds to "connection zone" of the present disclosure. Zone CZ2 is a zone adjacent to zone CZ1 and corresponds to "adjacent zone" of the present disclosure.

Heating device 18 can individually heat heating cylinder 122 and injection nozzle 126 under control by controller 140. Heating device 18 includes a plurality of heaters provided in association with respective heating zones. In the example of Fig. 2, heating device 18 includes a heater 181, a heater 182, a heater 183, a heater 184, a heater 185, a heater 186, and a heater 187. Heaters 181 to 185 heat zones CZ1 to CZ5, respectively. Heaters 186 and 187 heat zones NZ1 and NZ2, respectively.

Further, injection device 120 includes a temperature sensor T1, a temperature sensor T2, a temperature sensor T3, a temperature sensor T4, a temperature sensor T5, a temperature sensor T6, and a temperature sensor T7. Temperature sensors T1 to T7 detect the temperatures of zones CZ1 to CZ5, zone NZ1, and zone NZ2, respectively. The temperature detected by each temperature sensor is output to controller 140.

Controller 140 stores a set temperature for each zone. The set temperatures for respective zones may be identical to each other, or at least two of the set temperatures for respective zones may be different.

Controller 140 individually controls the heaters by PID (Proportional Integral Derivative) control, such that the temperature detected by each temperature sensor is caused to be the set temperature for a respective zone.

In the present embodiment, controller 140 simultaneously starts heating by heaters 181 to 187. After the detected temperature of each zone is caused to be the set temperature for the zone, injection molding machine 100 starts an injection molding process.

Generally the volume of the injection nozzle is smaller than the volume of the heating cylinder, and furthermore, since the material to be injected is stored in the heating cylinder, the heat capacity of the heating cylinder is larger than the heat capacity of the injection nozzle. Therefore, when the same amount of heat is applied to the injection nozzle and the heating cylinder, the temperature increase rate of the injection nozzle is faster than the temperature increase rate of the heating cylinder.

As such, when the temperature of the injection nozzle and the heating cylinder is raised, the timing at which the temperature of the injection nozzle reaches the set temperature is earlier than the timing at which the temperature of the heating cylinder reaches the set temperature. In this case, after the temperature of the injection nozzle reaches the set temperature, it is necessary to continue heating the injection nozzle in order to keep the temperature of the injection nozzle until the temperature of the heating cylinder reaches the set temperature. Accordingly, there may arise a problem that wasteful electric power is consumed in order to keep the temperature of the injection nozzle.

In view of this, based on the temperature of heating cylinder 122 detected by temperature sensor T2 described later herein, controller 140 of the present embodiment controls the temperature of injection nozzle 126 such that the temperature of the injection nozzle does not exceed the temperature of heating cylinder 122. More specifically, when raising the temperature of injection nozzle 126, controller 140 controls the heaters (heater 186 and heater 187) for injection nozzle 126 by setting a target temperature to the detected temperature of a predetermined portion of heating cylinder 122 whose temperature increase rate is slower than that of injection nozzle 126 under a certain condition. By this control, controller 140 can slow down the temperature increase rate of injection nozzle 126 by causing the temperature of injection nozzle 126 to be increased in synchronization with the predetermined portion of heating cylinder 122.

Thus, injection molding machine 100 can delay the timing at which injection nozzle 126 reaches the set temperature. As a result, in injection molding machine 100 of the present embodiment, wasteful electric power for keeping the temperature of the injection nozzle can be reduced. In the following, a zone of the predetermined portion of heating cylinder 122 is also referred to as "synchronization zone."

In the present embodiment, the synchronization zone is a portion corresponding to a zone that is larger in heat capacity than injection nozzle 126 among the zones of heating cylinder 122 (that is, a zone having a slower temperature increase rate). Thus, injection molding machine 100 can delay the timing at which the detected temperature of injection nozzle 126 reaches the set temperature, and can accordingly reduce power consumption.

Further, in the present embodiment, the synchronization zone is defined as zone CZ2 that is largest in heat capacity among the zones of heating cylinder 122 (that is, a zone having the slowest temperature increase rate). Therefore, zone CZ2 is latest among the zones, in terms of the timing at which the detected temperature of the zone reaches the set temperature. Thus, injection molding machine 100 can delay the timing at which the detected temperature of injection nozzle 126 reaches the set temperature to the above-described latest timing. As a result, injection molding machine 100 can further reduce wasteful electric power as compared with the case where the synchronization zone is defined as another zone of heating cylinder 122.

As described above, the temperature of the synchronization zone is detected by temperature sensor T2. Based on the detected temperature of the synchronization zone, injection molding machine 100 performs PID control of the heater for injection nozzle 126. Each of the temperature sensor T6 and the temperature sensor T7 that detect the temperature of injection nozzle 126 corresponds to "nozzle temperature sensor" of the present disclosure. Temperature sensor T2 that detects the temperature of the synchronization zone (zone CZ2) corresponds to "cylinder temperature sensor" of the present disclosure.

### [Functional Block Diagram of Controller]

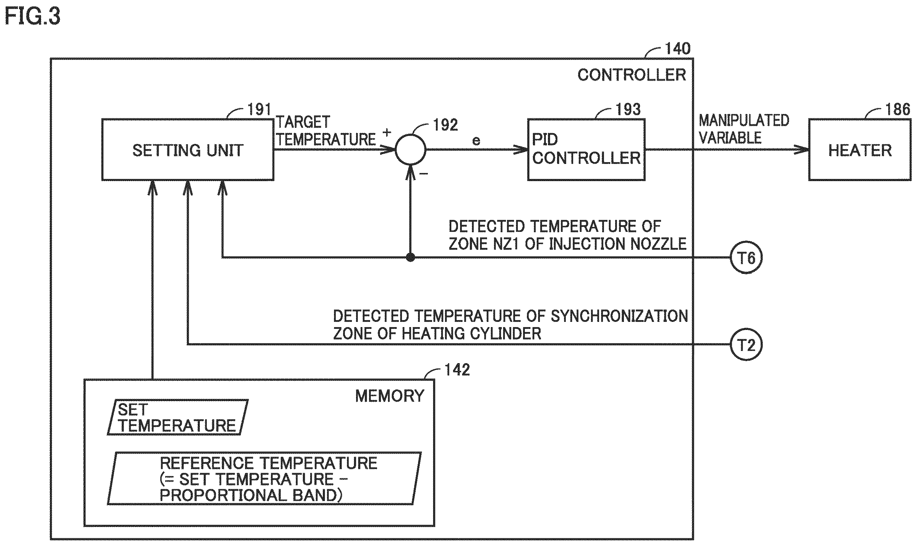

Fig. 3 is a functional block diagram of controller 140. Controller 140 includes a setting unit 191, a subtraction unit 192, a PID controller 193, and a memory 142. Fig. 3 is a diagram for illustrating control of heater 186 for heating zone NZ1 of injection nozzle 126. In connection with Fig. 3, an example case where zone NZ1 of injection nozzle 126 is heated is described.

Controller 140 heats zone NZ1 using, as a target temperature, the detected temperature of the synchronization zone (heats zone NZ1 aiming at a target temperature that is the detected temperature of the synchronization zone), until the temperature of zone NZ1 detected by temperature sensor T6 approaches the set temperature for zone NZ1. When the detected temperature of zone NZ1 approaches the set temperature for zone NZ1, controller 140 switches the target temperature to the set temperature for zone NZ1 to heat zone NZ1.

In the following description, "target temperature" is a target temperature under PID control of each zone. "Set temperature" is a temperature that the temperature of each zone finally reaches. "Reference temperature" is a temperature indicating a point (switching point) at which the target temperature is switched as described above. In other words, the reference temperature is a temperature for determining whether or not the detected temperature of zone NZ1 has approached the set temperature for zone NZ1.

The set temperature and the reference temperature for each zone are stored in memory 142. The reference temperature in the present embodiment is calculated by subtracting a proportional band from the set temperature. In the present embodiment, the reference temperature includes a nozzle reference temperature for zone NZ1 and a cylinder reference temperature for the synchronization zone.

The nozzle reference temperature is calculated by subtracting the proportional band for zone NZ1 from the set temperature for zone NZ1. The proportional band for zone NZ1 is the reciprocal of the proportional gain used for the P control of the PID control of zone NZ1. The nozzle reference temperature is a temperature indicating that the detected temperature of zone NZ1 has approached the set temperature for zone NZ1 when increasing the temperature of zone NZ1.

The cylinder reference temperature is calculated by subtracting a proportional band for the synchronization zone from the set temperature for the synchronization zone. The proportional band for the synchronization zone is the reciprocal of the proportional gain used for the P control of the PID control of the synchronization zone. The cylinder reference temperature is a temperature indicating that the detected temperature of the synchronization zone has approached the set temperature for the synchronization zone in increasing the temperature of the synchronization zone.

The set temperature for zone NZ1 corresponds to "nozzle set temperature" of the present disclosure. The set temperature for the synchronization zone corresponds to "cylinder set temperature" of the present disclosure. The proportional band for zone NZ1 corresponds to "nozzle predetermined temperature" of the present disclosure. The proportional band for the synchronization zone corresponds to "cylinder predetermined temperature" of the present disclosure. The proportional gain for zone NZ1 corresponds to "nozzle proportional gain" of the present disclosure. The proportional gain for the synchronization zone corresponds to "cylinder proportional gain" of the present disclosure.

The detected temperature of the synchronization zone from temperature sensor T2 and the detected temperature of zone NZ1 from temperature sensor T6 are input to setting unit 191. Setting unit 191 acquires the set temperature for NZ1, the nozzle reference temperature, and the cylinder reference temperature in memory 142.

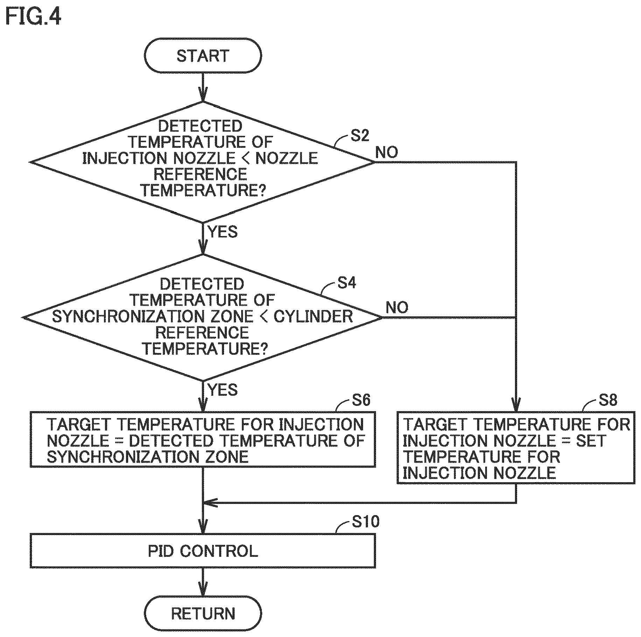

Setting unit 191 sets the detected temperature of the synchronization zone or the set temperature for zone NZ1 as the target temperature, in the manner described in connection with steps S2 to S8 of Fig. 4 described later herein.

Subtraction unit 192 calculates a deviation e by subtracting the detected temperature of zone NZ1 from the set target temperature. Deviation e is input to PID controller 193. PID controller 193 calculates a manipulated variable for heater 186 by performing calculation by PID control on deviation e, and controls heater 186.

### [Flowchart for Controller]

Fig. 4 is a flowchart for illustrating a main process performed by controller 140. Controller 140 performs the process shown in this flowchart every predetermined period (for example, 1 ms).

Initially, in step S2, controller 140 determines whether or not the detected temperature of injection nozzle 126 is lower than the nozzle reference temperature. When the detected temperature of injection nozzle 126 is lower than the nozzle reference temperature (YES in step S2), the process proceeds to step S4.

In step S4, controller 140 determines whether or not the detected temperature of the synchronization zone of heating cylinder 122 is lower than the cylinder reference temperature. When the detected temperature of the synchronization zone is lower than the cylinder reference temperature (YES in step S4), that is, when it is the initial state after heating of injection nozzle 126 and heating cylinder 122 is started, the process proceeds to step S6.

In step S6, controller 140 sets the target temperature for injection nozzle 126 to the detected temperature of the synchronization zone of heating cylinder 122. Therefore, in the above-described initial state, the process of step S6 enables injection molding machine 100 to synchronize the temperature increase rate of injection nozzle 126 with the temperature increase rate of the synchronization zone of heating cylinder 122. As a result, injection molding machine 100 can slow down the temperature increase rate of injection nozzle 126 in the initial state.

In contrast, when the detected temperature of injection nozzle 126 is higher than the nozzle reference temperature (NO in step S2), that is, when the detected temperature of injection nozzle 126 has approached the set temperature for injection nozzle 126, controller 140 causes the process to proceed to step S8. When the detected temperature of the synchronization zone of heating cylinder 122 is higher than the cylinder reference temperature (NO in step S4), that is, when the synchronization zone of heating cylinder 122 has approached the set temperature for the zone, controller 140 also causes the process to proceed to step S8.

In step S8, controller 140 changes the target temperature for injection nozzle 126 back to the set temperature for injection nozzle 126. Thus, when the detected temperature of injection nozzle 126 has approached the set temperature for injection nozzle 126, controller 140 can finally heat injection nozzle 126 to the intended temperature by causing the temperature of injection nozzle 126 to be the set temperature for injection nozzle 126.

After the process of step S6 or step S8 ends, in step S10, controller 140 performs the PID control using the set target temperature for injection nozzle 126. The PID control is a process performed by subtraction unit 192 and PID controller 193 in Fig. 3.

Thus, based on the detected temperature of heating cylinder 122, controller 140 controls the detected temperature of injection nozzle 126 so as not to exceed the temperature of heating cylinder 122. More specifically, in the initial state in which the nozzle temperature is sufficiently lower than the set temperature, controller 140 controls heating by switching the target temperature for injection nozzle 126 to the detected temperature of the synchronization zone, so that the temperature increase rate of injection nozzle 126 can be slowed down (step S6). Then, when the nozzle temperature further increases with time and eventually the detected temperature of injection nozzle 126 has approached the set temperature for injection nozzle 126, controller 140 controls heating by changing the target temperature for injection nozzle 126 back to the set temperature for injection nozzle 126 (step S8). Thus, controller 140 can cause injection nozzle 126 to be heated to the final set temperature while delaying the timing at which the temperature of injection nozzle 126 reaches its set temperature to the timing at which the synchronization zone reaches its set temperature. Accordingly, injection molding machine 100 according to the present embodiment can reduce electric power consumed when raising the temperature of injection nozzle 126.

The target temperature for the injection nozzle is set through comparison between the detected temperature of injection nozzle 126 and the nozzle reference temperature shown in step S2 of Fig. 4, and comparison between the detected temperature of the synchronization zone and the cylinder reference temperature shown in step S4. Thus, injection molding machine 100 according to the present embodiment can reduce the power consumption for the temperature control of injection nozzle 126 by the relatively simple process without requiring complicated calculation.

As shown in Fig. 3, the reference temperature is set using the "proportional band." Therefore, since injection molding machine 100 can set the switching point at which the target temperature is switched, to the point determined in consideration of the control gain, it is possible to set the switching point suitable for the control and achieve smooth control. Since the unit of the proportional band is the temperature, the user can easily identify the switching point.

### [Simulation Results]

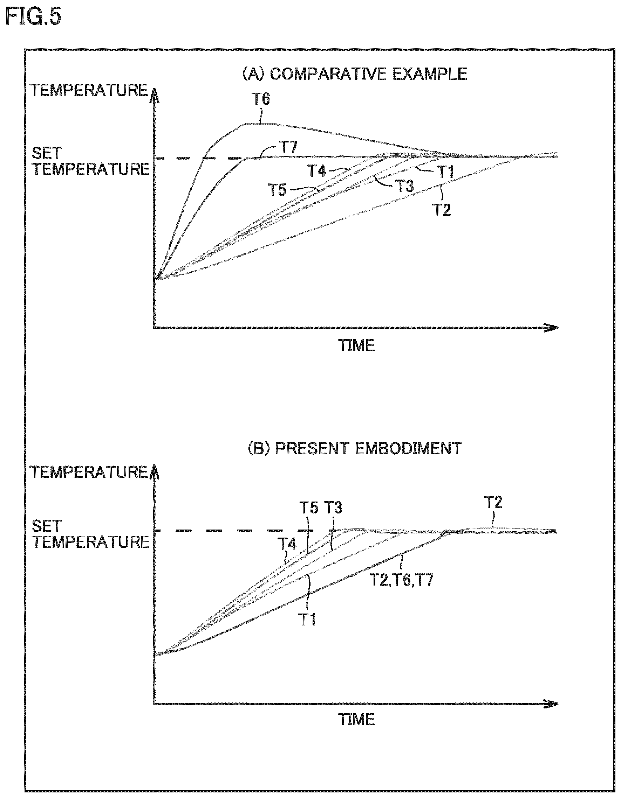

Fig. 5 is a diagram showing simulation results for illustrating effects and the like of injection molding machine 100 according to the present embodiment. In Fig. 5, (A) is a diagram showing a simulation result for an injection molding machine of a comparative example. The injection molding machine of the comparative example controls each heater with a target temperature that is set to a set temperature for each zone. In Fig. 5, (B) is a diagram showing a simulation result for injection molding machine 100 according to the present embodiment. In (A) and (B) of Fig. 5, the vertical axis represents the temperature detected by temperature sensors T1 to T7, and the horizontal axis represents time.

In (A) and (B) of Fig. 5, set temperatures for seven zones (zones CZ1 to CZ5, NZ1, and NZ2) are indicated by a broken line. In this example of the simulation, all of the set temperatures for the seven zones are set to the same temperature.

As described above, the temperature increase rate of the injection nozzle is faster than the temperature increase rate of the heating cylinder. Therefore, in the case of the comparative example, as shown by the graphs of temperature sensors T6 and T7 in (A) of Fig. 5, the timing at which the detected temperature of the injection nozzle reaches the set temperature is earlier than the timing at which the detected temperature of the heating cylinder reaches the set temperature. In this case, after the temperature of the injection nozzle reaches the set temperature, it is necessary to continue heating the injection nozzle in order to keep the temperature of the injection nozzle until the temperature of the heating cylinder reaches the set temperature, which results in consumption of wasteful electric power.

In contrast, as shown in (B) of Fig. 5 to which the control of the present embodiment is applied, injection molding machine 100 controls the detected temperature of injection nozzle 126 (the temperature detected by temperature sensors T6 and T7) so as not to exceed the temperature of heating cylinder 122 (the temperature detected by temperature sensors T1 to T5). More specifically, injection molding machine 100 can synchronize the temperature increase rate of injection nozzle 126 with the temperature increase rate of the synchronization zone by performing the process of Fig. 4 to switch and control the target temperature for control. Thus, the timing at which the detected temperature of injection nozzle 126 reaches the set temperature can be delayed, and accordingly, the electric power consumed for the temperature control of injection nozzle 126 can be reduced.

### <Other Embodiments>

(1) While the example in which the "proportional band" is used as the "predetermined temperature" for determining the switching point is illustrated above, the predetermined temperature may not necessarily be identical to the proportional band. The predetermined temperature may be set to a value within a range of ±20% with respect to the proportional band, for example.

More specifically, the upper limit value of the nozzle predetermined range of the nozzle predetermined temperature is a value determined by multiplying the nozzle proportional band by a real number A (A>1), and the lower limit value of the nozzle predetermined range is a value determined by multiplying the nozzle proportional band by a real number B (0<B<1). For example, they are A=1.2 and B=0.8.

The upper limit value of the cylinder predetermined range of the cylinder predetermined temperature is a value determined by multiplying the cylinder proportional band by a real number C (C>1), and the lower limit value of the cylinder predetermined range is a value determined by multiplying the cylinder proportional band by a real number D (0<D<1). For example, they are C=1.2 and D=0.8.

(2) In the above embodiment, the synchronization zone is zone CZ2 having the largest heat capacity in heating cylinder 122. However, the synchronization zone may also be a zone different from zone CZ2 of heating cylinder 122.

While the embodiments of the present invention have been described, it should be construed that the embodiments disclosed herein are given by way of illustration in all respects, not by way of limitation. It is intended that the scope of the present invention is defined by claims, and encompasses all modifications and variations equivalent in meaning and scope to the claims.

## Claims

1. An injection molding machine (100) comprising:
an injection device (120) that melts and injects an injection material;
a mold clamping device (110) that clamps a mold (117) into which the injection material has been injected; and
a controller (140) that controls the injection device (120), wherein
the injection device (120) includes:
a cylinder (122);
a screw (123) that is placed in the cylinder (122) and heats the injection material into a molten material;
a nozzle (126) that is placed at a distal end of the cylinder (122) and injects, into the mold (117), the molten material generated by heating;
a nozzle temperature sensor (T6, T7) that detects a temperature of the nozzle (126);
a cylinder temperature sensor (T2) that detects a temperature of the cylinder (122); and
a heating device (18) that is controlled by the controller (140) and configured to heat the nozzle (126) and the cylinder (122) independently of each other, and
the controller (140) is configured to control the temperature of the nozzle (126) based on the temperature detected by the cylinder temperature sensor (T2), so as not to exceed the temperature of the cylinder (122).

2. The injection molding machine (100) according to claim 1, wherein
the cylinder temperature sensor (T2) is configured to detect a temperature of a predetermined portion of the cylinder (122),
a temperature increase rate of the nozzle (126) is faster than a temperature increase rate of the predetermined portion,
the controller (140) is configured to control the heating device (18) such that the temperature of the nozzle (126) is caused to be a nozzle set temperature,
a nozzle reference temperature is defined as a temperature determined by subtracting a nozzle predetermined temperature from the nozzle set temperature, and
in order to prevent the temperature of the nozzle (126) from exceeding the temperature of the cylinder (122), the controller (140) is configured to
heat the nozzle (126) using the temperature of the predetermined portion detected by the cylinder temperature sensor (T2) as a target temperature, when the temperature of the nozzle (126) is lower than the nozzle reference temperature, and
heat the nozzle (126) using the nozzle set temperature as the target temperature, when the temperature of the nozzle (126) is higher than the nozzle reference temperature.

3. The injection molding machine (100) according to claim 2, wherein
the cylinder (122) is divided into a plurality of zones (CZ1 to CZ5) in a direction in which the cylinder (122) extends,
the heating device (18) is configured to individually heat the plurality of zones (CZ1 to CZ5), and
the predetermined portion is a portion corresponding to a zone that is larger in heat capacity than the nozzle (126) among the plurality of zones (CZ1 to CZ5).

4. The injection molding machine (100) according to claim 3, wherein the predetermined portion is a zone that is largest in heat capacity among the plurality of zones (CZ1 to CZ5).

5. The injection molding machine (100) according to claim 4, wherein
the plurality of zones (CZ1 to CZ5) include:
a connection zone (CZ1) to which the nozzle (126) is connected; and
an adjacent zone (CZ2) adjacent to the connection zone (CZ1), and the predetermined portion is the adjacent zone (CZ2).

6. The injection molding machine (100) according to any one of claims 2 to 5, wherein
the controller (140) is configured to use a nozzle proportional gain to control the heating device (18), and
the nozzle predetermined temperature is set to fall within a predetermined range including a reciprocal of the nozzle proportional gain.

7. The injection molding machine (100) according to claim 6, wherein the nozzle predetermined temperature is the reciprocal of the nozzle proportional gain.

8. The injection molding machine (100) according to any one of claims 2 to 7, wherein
the controller (140) is configured to control the heating device (18) such that the temperature of the predetermined portion is caused to be a cylinder set temperature,
a cylinder reference temperature is defined as a temperature determined by subtracting a cylinder predetermined temperature from the cylinder set temperature, and
the controller (140) is configured to heat the nozzle (126) using the temperature of the predetermined portion as a target temperature, when the temperature of the nozzle (126) is lower than the nozzle reference temperature and the temperature of the predetermined portion is lower than the cylinder reference temperature.

9. The injection molding machine (100) according to claim 8, wherein the controller (140) is configured to cause the nozzle (126) to be heated using the nozzle set temperature as the target temperature, when the temperature of the nozzle (126) is lower than the nozzle reference temperature and the temperature of the predetermined portion is higher than the cylinder reference temperature.

10. The injection molding machine (100) according to claim 8, wherein
the controller (140) is configured to use a cylinder proportional gain to control the heating device (18) heating the predetermined portion, and
the cylinder predetermined temperature is set to fall within a predetermined range including a reciprocal of the cylinder proportional gain.

11. The injection molding machine (100) according to claim 10, wherein the cylinder predetermined temperature is the reciprocal of the cylinder proportional gain.

12. An injection device (120) comprising:
a cylinder (122);
a screw (123) that is placed in the cylinder (122) and heats an injection material into a molten material;
a nozzle (126) that is placed at a distal end of the cylinder (122) and injects, into a mold (117), the molten material generated by heating;
a nozzle temperature sensor (T6, T7) that detects a temperature of the nozzle (126);
a cylinder temperature sensor (T2) that detects a temperature of the cylinder (122); and
a heating device (18) configured to heat the nozzle (126) and the cylinder (122) independently of each other, wherein
the temperature of the nozzle (126) is controllable so as not to exceed the temperature of the cylinder (122), based on the temperature detected by the cylinder temperature sensor (T2).

13. A method of controlling an injection molding machine (100),
the injection molding machine (100) comprising:
an injection device (120) that melts and injects an injection material; and
a mold clamping device (110) that clamps a mold (117) into which the injection material has been injected;
the injection device (120) including:
a cylinder (122);
a screw (123) that is placed in the cylinder (122) and heats the injection material into a molten material; and
a nozzle (126) that is placed at a distal end of the cylinder (122) and injects, into the mold (117), the molten material generated by heating,
the method comprising:
(a) controlling, based on a temperature of the cylinder (122), a temperature of the nozzle (126) so as not to exceed the temperature of the cylinder (122).

14. The method of controlling the injection molding machine (100) according to claim 13, wherein
a temperature increase rate of the nozzle (126) is faster than a temperature increase rate of a predetermined portion of the cylinder (122),
a nozzle reference temperature is defined as a temperature determined by subtracting a nozzle predetermined temperature from a nozzle set temperature for the nozzle (126), and
in order to prevent the temperature of the nozzle (126) from exceeding the temperature of the cylinder (122), the (a) controlling the temperature of the nozzle (126) includes:
(b) heating the nozzle (126) using a temperature of the predetermined portion as a target temperature, when the temperature of the nozzle (126) is lower than the nozzle reference temperature; and
(c) heating the nozzle (126) using the nozzle set temperature as the target temperature, when the temperature of the nozzle (126) is higher than the nozzle reference temperature.

15. The method of controlling the injection molding machine (100) according to claim 14, wherein
the cylinder (122) is divided into a plurality of zones (CZ1 to CZ5) in a direction in which the cylinder (122) extends,
the method comprises heating the plurality of zones (CZ1 to CZ5) individually, and
the predetermined portion is a portion corresponding to a zone that is larger in heat capacity than the nozzle (126) among the plurality of zones (CZ1 to CZ5).

16. The method of controlling the injection molding machine (100) according to claim 15, wherein the predetermined portion is a zone that is largest in heat capacity among the plurality of zones (CZ1 to CZ5).

17. The method of controlling the injection molding machine (100) according to claim 16, wherein
the plurality of zones (CZ1 to CZ5) include:
a connection zone (CZ1) to which the nozzle (126) is connected; and
an adjacent zone (CZ2) adjacent to the connection zone (CZ1), and
the predetermined portion is the adjacent zone (CZ2).

18. The method of controlling the injection molding machine (100) according to any one of claims 14 to 17, wherein
the method comprises using a nozzle proportional gain to heat the nozzle (126), and
the nozzle predetermined temperature is set to fall within a predetermined range including a reciprocal of the nozzle proportional gain.

19. The method of controlling the injection molding machine (100) according to claim 18, wherein the nozzle predetermined temperature is the reciprocal of the nozzle proportional gain.

20. The method of controlling the injection molding machine (100) according to any one of claims 14 to 19, wherein
a cylinder reference temperature is defined as a temperature determined by subtracting a cylinder predetermined temperature from a cylinder set temperature for the predetermined portion, and
the (a) controlling the temperature of the nozzle (126) includes:
(e) heating the nozzle (126) using the temperature of the predetermined portion as the target temperature, when the temperature of the nozzle (126) is lower than the nozzle reference temperature and the temperature of the predetermined portion is lower than the cylinder reference temperature of the predetermined portion.
